# EUROPÄISCHE PATENTSCHRIFT

(11) **EP 0 682 044 B1**
(45) Veröffentlichungstag und Bekanntmachung des Hinweises auf die Patenterteilung: **09.06.1999**
(21) Anmeldenummer: 95106335.3
(22) Anmeldetag: 27.04.1995
(51) Int. Cl.: C08F 210/14, C08F 222/00, C08F 8/44, C08F 8/32, C14C 9/00, C08F 255/00

(54) **Copolymere auf Basis von ethylenisch ungesättigten Dicarbonsäureanhydriden, langkettigen Olefinen und Fluorolefinen, ihre Herstellung und ihre Verwendung**
Copolymers of ethylenically unsaturated dicarboxylic acid anhydrides, long-chaim olefines and fluoro-olefines, their preparation and their use
Copolymères à base d'anhydrides dicarboxyliques, d'oléfines à longue chaine et de fluoro-oléfines, leur préparation et leur utilisation

(30) Priorität: 10.05.1994 DE 4416415
(43) Veröffentlichungstag der Anmeldung: 15.11.1995
(73) Patentinhaber: Clariant GmbH, 65929 Frankfurt am Main (DE)
(72) Erfinder: Bildhauer, Michael, Dr., D-63329 Egelsbach (DE); Kupfer, Rainer, Dr., D-65795 Hattersheim (DE); Siebott, Günther, D-65929 Frankfurt am Main (DE); Mees, Bernhard, Dr., D-65817 Eppstein (DE); Friedrich, Herbert, Dr., D-63150 Heusenstamm (DE)

(56) Entgegenhaltungen:
- EP-A- 0 307 815
- EP-A- 0 324 354
- EP-A- 0 412 389
- FR-A- 2 135 585
- DAS LEDER, Bd. 41, August 1990 DARMSTADT, L. SCHLÖSSER 'Eigenschaften fluororganischer Verbindungen und ihre Anwendung auf dem Ledergebiet'
- DATABASE WPI Week 7102 Derwent Publications Ltd., London, GB; AN 71-03127s & NL-A-6 910 232 (E.I.DUPONT DE NEMOURS & COMPANY) , 5.Januar 1971
- DATABASE WPI Week 8543 14.September 1985 Derwent Publications Ltd., London, GB; AN 85-267520 & JP-A-60 181 155 (DENKI KAGAKU KOKYO KK)
- DATABASE WPI Week 8314 1.März 1983 Derwent Publications Ltd., London, GB; AN 83-33633 & JP-A-58 034 867 (DAINIPPON INK CHEM KK)

## Beschreibung

Die Lederherstellung ist ein komplexer Prozess mehrerer aufeinander folgender Verfahrensschritte. In einem der ersten Schritte, dem sogenannten "Äscher", werden die an der Rohhaut anhaftenden Fleischreste, Borsten und Haare auf chemischem Weg entfernt. Weitere wichtige Schritte sind Gerbung und Fettung. Um geschmeidige Leder zu erhalten, müssen sie gefettet werden. Diesen Prozeß bezeichnet der Fachmann als "Lickern".

Klassische Lederlicker basieren auf tierischen bzw. pflanzlichen Ölen und Fetten, z.B. Fischöl und Palmöl oder petrochemischen Produkten, wie Paraffine und α-Olefine mit einer Kettenlänge von mehr als 20 Kohlenstoffatomen. Durch chemische Umwandlung, z.B. durch Oxisulfitierung oder Sulfochlorierung, werden diese Verbindungen wasseremulgierbar und können in dieser Form als Licker eingesetzt werden.

Seit einigen Jahren werden zunehmend Copolymerisate als Lederfettungsmittel eingesetzt.

EP-A-0 372 746 beschreibt den Einsatz von amphiphilen Copolymeren, d.h. Copolymeren, die sowohl hydrophile als auch lipophile Eigenschaften besitzen, zur Lederbehandlung. Die dort beschriebenen Copolymere enthalten mehr als 10 Gew.-% mindestens eines hydrophilen Monomers und mehr als 50 Gew.-% mindestens eines hydrophoben Comonomers. Als hydrophile Monomere werden wasserlösliche, ethylenisch ungesättigte, saure oder basische Monomere sowie Mischungen daraus eingesetzt. Beispiele für derartige Monomere sind: (Meth)Acrylsäure, Itaconsäure, Fumarsäure, Maleinsäure sowie deren Anhydride, bevorzugt Acrylsäure. Als geeignete hydrophobe Comonomere werden primäre Alkene, z.B. C₁₂-C₁₈-α-Olefine eingesetzt. Die amphiphilen Copolymere werden in Form einer mindestens 1 gew.-%igen wäßrigen Dispersion, bezogen auf das Gewicht der gegerbten Haut, als Lederfettungsmittel eingesetzt.

In US-A-5 279 613 wird die Verwendung von Salzen von Copolymerisaten von C₈-bis C₄₀-Monoolefinen mit ethylenisch ungesättigten C₄- bis C₈-Dicarbonsäureanhydriden als Mittel zum Hydrophobieren von Leder und Pelzfellen beschrieben.

Diese bekannten Copolymerisate weisen jedoch verschiedene Nachteile auf. Ihr Einsatz führt zu einer gewissen Losnarbigkeit des Leders, d.h. Optik und Formgebung des Leders werden durch Faltenbildung beeinträchtigt. Darüber hinaus erreicht man mit diesen Mitteln zwar eine Hydrophobierung des Leders bei dynamischer Belastung (dynamische Wasserabweisung), eine ausreichende Hydrophobierung bei statischer Belastung (statische Wasserabweisung) wird jedoch nicht erzielt.

In dem Artikel von L. Schlösser (Fachzeitschrift für die Chemie und Technologie der Lederherstellung, Seite 149ff, 1990) wird der Einsatz von wäßrigen Emulsionen fluororganischer Verbindungen zur gleichzeitigen öl- und wasserabstoßenden sowie schmutzabweisenden Ausrüstung von Möbelleder beschrieben. Die dort beschriebenen fluororganischen Verbindungen enthalten eine aliphatische Kohlenwasserstoffgruppe, in der die Wasserstoffatome vollständig gegen Fluoratome ausgetauscht sind. Die mit derartigen Emulsionen behandelten Leder weisen neben einer Luft- und Wasserdampfdurchlässigkeit aufgrund der verringerten Annetzbarkeit auch eine statische Wasserabweisung auf (sogenannte "wassertropfenechte" Leder). Das vorstehend beschriebene Eigenschaftsprofil der mit fluororganischen Verbindungen ausgerüsteten Leder machte jedoch das vorhergehende Lickern des Leders erforderlich.

Aufgabe der vorliegenden Erfindung ist es Verbindungen zur Verfügung zu stellen, mit denen eine verbesserte statische und dynamische Hydrophobierung von Leder und Pelzfellen erzielt wird.

Gegenstand der Erfindung ist ein Verfahren zur Herstellung von Copolymeren auf Basis von ethylenisch ungesättigten Dicarbonsäureanhydriden, langkettigen Olefinen und Fluorolefinen, das dadurch gekennzeichnet ist, daß man zunächst Monomere der allgemeinen Formel D und/oder E 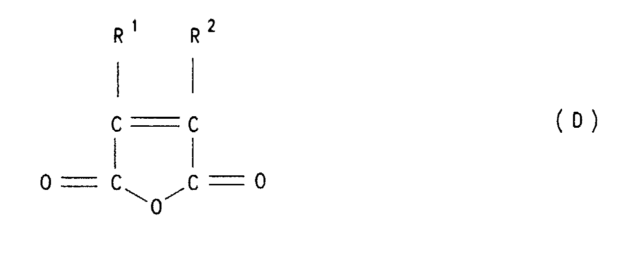 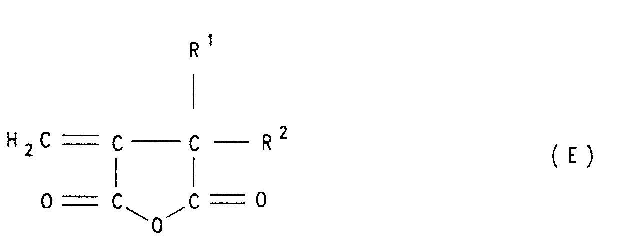 wobei R¹ und R² unabhängig voneinander Wasserstoff oder C₁-C₆-Alkyl bedeuten, Monomere der allgemeinen Formel F 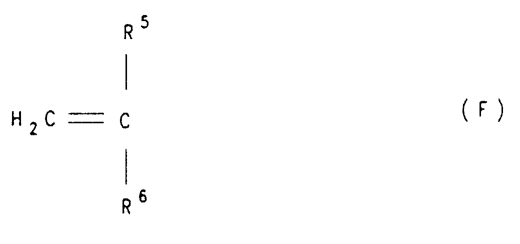 wobei
R⁵ Wasserstoff oder C₁-C₄-Alkyl und
R⁶ C₆-C₄₀-Alkyl oder C₅-C₁₈-Alkyl bedeuten
und Monomere der allgemeinen Formel G

H₂C=CH-CₙF₂ₙ₊₁ (G)

wobei
n eine Zahl von 6 bis 24 bedeutet,
bei einer Temperatur im Bereich von 40 bis 400 °C miteinander polymerisiert, wobei die Molverhältnisse zwischen ethylenisch ungesättigten Dicarbonsäureanhydriden, Monomeren der allgemeinen Formel (F) und monomeren der allgemeinen Formel (G) zwischen 1:0,5 - 2,0:0,01 - 0,5 liegen, und anschließend eine Solvolyse der Anhydridgruppen der erhaltenen Copolymerisate unter Bildung von Gruppen der Formel -CO-X durchführt, worin X die Gruppe -N-HR³, wobei R³ C₁-C₄₀-Alkyl, C₃-C₄₀-Alkenyl, bevorzugt C₃-C₂₀-Alkenyl, C₅-C₂₀-Cycloalkyl oder C₆-C₁₈-Aryl ist, die Gruppe -N-(R³)₂, wobei R³ gleich oder verschieden ist und die obengenannte Bedeutung besitzt und/oder die Gruppe -O-R⁴, wobei R⁴ Wasserstoff, ein Alkylimetallkation, das Äquivalent eines Erdalkalimetallions, ein Kation der Formel H₂N^{⊕}(R³)₂ oder H₃N^{⊕}R³, C₁-C₄₀-Alkyl, C₅-C₂₀-Cycloalkyl oder C₆-C₁₈-Aryl ist, bedeuten.

Beispiele für bevorzugte Dicarbonsäureanhydride sind Maleinsäureanhydrid, Itaconsäureanhydrid, Citraconsäureanhydrid.

Beispiele für bevorzugte Verbindungen der Formel (F) sind Styrol, α-Methylstyrol, Dimethylstyrol, α-Ethylstyrol, Diethylstyrol, i-Propylstyrol, tert.-Butylstyrol, Diisobutylen und α-Olefine, wie Decen, Dodecen, Tetradecen, Pentadecen, Hexadecen, Octadecen, C₂₀-α-Olefin, C₂₄-α-Olefin, C₃₀-α-Olefin, Tripropenyl, Tetrapropenyl, Pentapropenyl sowie deren Mischungen. Besonders bevorzugt sind α-Olefine mit 10 bis 24 C-Atomen und Styrol, besonders bevorzugt sind α-Olefine mit 12 bis 20 C-Atomen.

Die vorgenannten Alkyl-, Cycloalkyl- und Arylreste können gegebenenfalls substituiert sein. Geeignete Substituenten der Alkyl- und Arylreste sind beispielsweise (C₁-C₆)-Alkyl, Halogene, wie Fluor, Chlor, Brom und Jod, bevorzugt Chlor und (C₁-C₆)-Alkoxy.

Alkyl, Alkenyl (R³, R⁴) stehen erfindungsgemäß im allgemeinen für einen geradkettigen oder verzweigten Kohlenwasserstoffrest mit 1 - 40, bevorzugt 3 - 30 Kohlenstoffatomen. Im einzelnen seien genannt: n-Hexyl, n-Octyl, Decyl, Dodecyl, Tetradecyl, Hexadecyl, Octadecyl, Dodecenyl, Tetrapropenyl, Tetradecenyl, Pentapropenyl, Hexadecenyl, Octadecenyl und Eicosanyl oder Mischungen, wie Cocosalkyl, Talgfettalkyl und Behenyl.

Cycloalkyl (R³, R⁴) steht erfindungsgemäß im allgemeinen für einen cyclischen aliphatischen Rest mit 5 - 20 Kohlenstoffatomen. Bevorzugte Cycloalkylreste sind Cyclopentyl und Cyclohexyl.

Alkalimetallkation steht erfindungsgemäß im allgemeinen für ein Natrium-, Lithium oder Kaliummetallion. Erdalkalimetallkation steht erfindungsgemäß im allgemeinen für ein Magnesium-, Kalzium- oder Bariummetallion.

Die Polymerisation erfolgt nach bekannten diskontinuierlichen oder kontinuierlichen Polymerisationsverfahren, wie Masse-, Suspensions-, Fällungs- oder Lösungspolymerisation und Initiierung mit geeigneten Radikalkettenstartern, z.B. Hydroperoxide, Peroxide oder Azoverbindungen, wie Dilaurylperoxid, Dibenzoylperoxid, t-Butylperpivalat, t-Butylpermaleinat, t-Butylperbenzoat, Dicumylperoxid, t-Butylcumylperoxid, Di-t-butyl-peroxid, Cumylhydroperoxid, t-Butylhydroperoxid, 2,2'-Azo-bis(2-methylpropanonitril), 2,2'-Azo-bis(2-methylbutyronitril) und Mischungen untereinander. Im allgemeinen werden diese Initiatoren in Mengen von 0,1 bis 20 Gew.-%, vorzugsweise 0,2 bis 10 Gew.-%, bezogen auf die bei der Polymerisation eingesetzten Monomeren, eingesetzt.

Die Molverhältnisse zwischen den ethylenisch ungesättigten Dicarbonsäureanhydriden, Monomeren der allgemeinen Formel (F) und Monomeren der allgemeinen Formel (G) liegen im allgemeinen zwischen 1:0,5-2:0,01-0,5, bevorzugt 1:0,9-1,1:0,03-0,2.

Die erfindungsgemäß hergestellten Copolymere besitzen üblicherweise Molmassen (Gewichtsmittel, M_{w}) 500 bis 20000 g/mol (bestimmt mittels GPC).

Die Polymerisation erfolgt bei Temperaturen von 40 - 400°C, vorzugsweise bei 80-250°C, bei Substanzpolymerisation jedoch vorzugsweise bei 80 - 300°C und insbesondere bei 120 bis 200 °C, wobei bei Verwendung von Monomeren der allgemeinen Formel (F) oder Lösungsmitteln mit Siedetemperaturen unterhalb der Polymerisationstemperatur zweckmäßig unter Druck gearbeitet wird. Die Polymerisation wird zweckmäßig unter Luftausschluß, z.B. unter Stickstoff durchgeführt, da Sauerstoff die Polymerisation stört. Bei der Wahl des Initiators bzw. des Initiatorsystems ist es zweckmäßig, darauf zu achten, daß die Halbwertzeit des Initiators oder des Initiatorsystems bei der gewählten Polymerisationstemperatur weniger als 3 Stunden beträgt.

Zur Erzielung niedermolekularer Copolymere (M_{w}: 500 bis 2000 g/mol) ist es oftmals zweckmäßig, in Gegenwart von an sich bekannten Reglern zu arbeiten. Geeignete Regler sind beispielsweise organische Mercapto-Verbindungen, wie 2-Mercapto-Ethanol, 2-Mercapto-Propanol, Mercapto-Essigsäure, Mercapto-Propionsäure, tert.-Butylmercaptan, n-Butylmercaptan, n-Octylmercaptan, n-Dodecylmercaptan und tert.-Dodecylmercaptan, die im allgemeinen in Mengen von 0,1 Gew.-% bis 10 Gew.-% eingesetzt werden.

Für die Polymerisation geeignete Apparaturen sind z.B. übliche Rührkessel mit beispielsweise Anker-, Blatt-, Impeller- oder Mehrstufenimpuls-Gegenstrom-Rührer und für die kontinuierliche Herstellung Rührkesselkaskaden, Rührreaktoren oder statische Mischer.

Bevorzugtes Verfahren zur Herstellung der erfindungsgemäßen Copolymere ist die Substanzpolymerisation. Diese wird bevorzugt bei Temperaturen von 80 bis 300°C, besonders bevorzugt von 120 bis 200°C durchgeführt. Je nach Molekulargewicht, das die Copolymeren haben sollen, werden die Polymerisationsbedingungen gewählt. Polymerisation bei hohen Temperaturen ergibt Copolymerisate mit niedrigen Molekulargewichten, während bei niedrigeren Polymerisationstemperaturen Polymerisate mit höheren Molekulargewichten entstehen. Auch die Menge des Polymerisationsinitiators hat einen Einfluß auf das Molekulargewicht. Man benötigt im allgemeinen 0,01 bis 5 Gew.-%, bezogen auf die bei der Polymerisation eingesetzten Monomeren, an Radikale bildenden Polymersationsinitiatoren. Höhere Initiatormengen führen hierbei zu Copolymerisaten mit niedrigeren Molekulargewichten. Die Monomeren D und/oder E, F und G können bei Temperaturen von oberhalb 200°C auch in Abwesenheit von Polymerisationsinitiatoren copolymerisiert werden. Damit ist ein Einsatz von Initiatoren nicht unbedingt erforderlich, weil diese Monomeren bei Temperaturen von oberhalb 200°C auch in Abwesenheit von Initiatoren bereits radikalisch polymerisieren. Geeignete Polymerisationsinitiatoren sind beispielsweise Di-tert.-Butylperoxid, Acetylcyclohexansulfonylperoxid, Diacetylperoxidicarbonat, Dicyclohexylperoxidicarbonat, Di-2-Ethyl-hexylperoxidicarbonat, Tert.-Butylperneodecanoat, 2,2'-Azobis(4-methoxy-2,4-dimethylvaleronitril), Tert.-Butylperpivalat, Tert.-Butylper-2-ethyl-hexanoat, Tert.-Butylpermaleinat, 2,2'-Azobis(isobutyronitril), Bis-(tert.-Butylperoxi)cyclohexan, Tert.-Butylperoxiisopropylcarbonat, Tert-Butylperacetat, Di-tert-Butylperoxid, Di-tert-amylperoxid, Cumolhydroperoxid und Tert.-butylhydroperoxid. Die Initiatoren können allein oder in Mischung untereinander angewendet werden. Sie werden bei der Substanzpolymerisation vorzugsweise separat oder in Form einer Lösung oder Dispersion in dem Monoolefin in den Polymerisationsreaktor eingebracht. Bei der Copolymerisation können selbstverständlich auch Redox-Coinitiatoren mitverwendet werden, z.B. Benzoin, Dimethylanilin, Ascorbinsäure sowie organisch lösliche Komplexe von Schwermetallen, wie Kupfer, Kobalt, Eisen, Mangan, Nickel und Chrom. Die Mitverwendung von Redox-Coinitiatoren gestattet es, die Polymerisation bei tieferer Temperatur durchzuführen. Die üblicherweise verwendeten Mengen an Redox-Coinitiatoren betragen etwa 0,1 bis 2000, vorzugsweise 0,1 bis 1000 ppm, bezogen auf die eingesetzten Mengen an Monomeren. Falls das Monomerengemisch an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Die Copolymerisation wird in üblichen Polymerisationsapparaturen, beispielsweise einem druckdichten Kessel, der mit einem Rührer versehen ist, in druckdichten Rührkesselkaskaden oder in einem Rohrreaktor durchgeführt. Bei der Substanzpolymersation erfolgt die Copolymerisation der Monomere bevorzugt im molaren Verhältnis in Abwesenheit von Lösemitteln. Die Copolymerisation kann kontinuierlich oder diskontinuierlich durchgeführt werden. Beispielsweise kann man das Olefin oder ein Gemisch verschiedener Olefine im Reaktor vorlegen und unter Rühren auf die gewünschte Polymerisationstemperatur erhitzen. Sobald das Olefin bzw. das Olefingemisch die Polymerisationstemperatur erreicht hat, dosiert man das ethylenisch ungesättigte Dicarbonsäureanhydrid zu. Falls ein Initiator eingesetzt wird, wird er dem Reaktionsgemisch, vorzugsweise separat oder gelöst in einem zur Polymerisation eingesetzten Olefin, zudosiert. Der Polymerisationsregler wird, sofern er eingesetzt wird, entweder separat oder ebenfalls in einem Olefin gelöst der polymerisierenden Mischung zugefügt. Die Säureanhydride, insbesondere Maleinsäureanhydrid, werden vorzugsweise in Form einer Schmelze eingesetzt. Die Temperatur der Schmelze beträgt etwa 70 bis 90°C. Falls man bei der Copolymerisation das Olefin im Überschuß anwendet, z.B. in einem 10 %igen Überschuß, so kann es nach Abschluß der Copolymerisation ohne Schwierigkeit mit Hilfe einer Destillation, vorzugsweise unter vermindertem Druck, aus der Copolymerisatschmelze entfernt werden. Die Copolymerisatschmelze wird anschließend zweckmäßigerweise direkt weiter verarbeitet.

Die so hergestellten Copolymerisate werden nach dem Abkühlen auf Raumtemperatur oder vorzugsweise in Form der Schmelze, die eine Temperatur in dem Bereich von 80 bis 180°C, vorzugsweise 90 bis 150°C hat, solvolysiert. Die Solvolyse der Anhydridgruppen der Copolymerisate besteht im einfachsten Fall in einer Hydrolyse und anschließender teilweiser Neutralisation der bei der Hydrolyse entstandenen Carboxylgruppen. Es ist besonders vorteilhaft, in druckdichten Apparaturen zu arbeiten und dann direkt durch Zugabe von Wasser zu einer Schmelze der bei der Substanzpolymerisation erhältlichen Copolymerisate die Anhydridgruppen in Carboxylgruppen zu überführen und durch anschließende Zugabe von Basen mindestens 10 % der Carboxylgruppen der hydrolysierten Copolymerisate zu neutralisieren. Hydrolyse und Neutralisation können jedoch auch praktisch gleichzeitig durch Zugabe verdünnter wäßriger Basen zur Copolymerisatschmelze vorgenommen werden. Die Mengen an Wasser und an Neutralisationsmittel werden dabei so gewählt, daß 10 bis 60, vorzugsweise 20 bis 55 Gew.-% Feststoffe enthaltende Dispersionen oder Lösungen entstehen, die in den Handel gebracht werden. Daraus werden dann Präparationslösungen durch Verdünnen auf Feststellgehalte von 0,5 bis 50 Gew.-% hergestellt.

Die durch Substanzpolymerisation erhältlichen Copolymerisate können auch durch Zugabe von primären Aminen und/oder sekundären Aminen solvolysiert werden. Die Solvolyse wird dabei mit solchen Mengen an Aminen durchgeführt, daß 10 bis 50 % der aus den einpolymerisierten Dicarbonsäureanhydrideinheiten (Monomeren D und E) insgesamt bei einer vollständigen Hydrolyse entstehenden Carboxylgruppen amidiert sind. Nach der Bildung von Halbamid-Gruppen im Copolymerisat erfolgt die Neutralisation. Sie wird soweit geführt, daß mindestens 10 % der Carboxylgruppen des bei der Substanzpolymerisation anfallenden Copolymerisates neutralisiert werden.

Die Solvolyse kann auch durch Zugabe von Alkoholen zu einer Schmelze der bei der Substanzpolymerisation erhältlichen Copolymerisate vorgenommen werden. Man setzt dabei solche Mengen an Alkohol ein, daß 10 bis 50 % der aus den einpolymerisierten Dicarbonsäureeinheiten insgesamt entstehenden Carboxylgruppen verestert werden. Anschließend erfolgt eine Neutralisation, bei der mindestens 10 % der insgesamt aus dem Anhydridgruppen enthaltenden Copolymerisat entstehenden Carboxylgruppen neutralisiert sind.

Vorzugsweise werden jeweils 25 bis 50 % der aus den einpolymerisierten Dicarbonsäureanhydriden insgesamt entstehenden Carboxylgruppen amidiert oder verestert. Als Neutralisationsmittel eignen sich beispielsweise Ammoniak, sowie Amine, die auch zur Amidierung der Copolymerisate eingesetzt werden, Alkalimetall- und Erdalkalimetallhydroxide, z.B. Natronlauge, Kalilauge, Magnesiumhydroxid, Calciumhydroxid oder Bariumhydroxid. Vorzugsweise erfolgt die Neutralisation durch Zugabe von wäßriger Natronlauge zum Copolymerisat. Die Neutralisation der Anhydridgruppen enthaltenden Copolymerisate wird mindestens bis zu einem solchen Grad durchgeführt, daß man in Wasser dispergierbare Copolymerisate erhält. Dieser Neutralisationsgrad liegt bei mindestens 10 % der insgesamt aus den Anhydridgruppen entstehenden Carboxylgruppen.

Zur Amidbildung kann man primäre Amine und/oder sekundäre Amine einsetzen. Die Amidbildung erfolgt vorzugsweise in Anwesenheit von Wasser durch Reaktion der Anhydridgruppen des Copolymerisats mit den Aminen. Die in Betracht kommenden primären und sekundären Amine können 1 bis 40, vorzugsweise 3 bis 30 Kohlenstoffatome aufweisen. Geeignete Amine sind beispielsweise Methylamin, Ethylamin, n-Propylamin, Isopropylamin, n-Butylamin, Isobutylamin, Hexylamin, (z.B. n-Hexylamin) Cyclohexylamin, Methylcyclohexylamin, 2-Ethylhexylamin, n-Octylamin, Isotridecylamin, Talgfettamin, Stearylamin, Oleylamin, n-Tetradecylamin n-Hexadecylamin, oder auch N,N-Dimethylaminopropylendiamin, Dehydroabietylamin sowie deren Mischungen; Dimethylamin, Diethylamin, Di-n-Propylamin, Di-lsopropylamin, Di-n-Butylamin, Di-lsobutylamin, Dihexylamin, Di-Cyclohexylamin, Di-Methylcyclohexylamin, Di-2-Ethylhexylamin, Di-n-Octylamin, Di-lsotridecylamin, Di-Talgfettamin, Di-Stearylamin und Di-Oleylamin, Didecylamin, Di-Tetradecylamin, Di-Cocosfettamin, Di-Talgfettamin und deren Mischungen.

Um die bei der Substanzpolymerisation erhaltenen Anhydridgruppen aufweisenden Copolymerisate partiell zu verestern, werden sie mit Alkoholen umgesetzt. Auch die Veresterung erfolgt vorzugsweise unter Ausschluß von Wasser. Geeignete Alkohole können 1 bis 40, vorzugsweise 3 bis 30 C-Atome enthalten. Es können primäre, sekundäre und tertiäre Alkohole Verwendung finden. Man kann sowohl gesättigte aliphatische Alkohole als auch ungesättigte Alkohole, wie beispielsweise Oleylalkohol einsetzen. Vorzugsweise werden einwertige, primäre oder sekundäre Alkohole verwendet, z.B. Methanol, Ethanol, n-Propanol, Isopropanol, n-Butanol, Isobutanol, n-Pentanol und Isomere, n-Hexanol und Isomere, n-Octanol und Isomere, wie z.B. 2-Ethylhexanol, Nonanole, Decanole, Dodecanole (z.B. n-Dodecanol), Tridecanole, Cyclohexanol, Talgfettalkohol, Stearylalkohol, Behenylalkohol sowie die technisch durch Oxosynthese leicht zugänglichen Alkohole bzw. Alkoholgemische mit 9 bis 19 C-Atomen, wie z.B. C_{9/11}-Oxoalkohol, C_{12/15}-Oxoalkohol sowie Ziegleralkohole, die unter den Namen Alfol® bekannt sind, mit 12 bis 24 C-Atomen. Vorzugsweise verwendet man Alkohole mit 4 bis 24 C -Atomen, wie z.B. n-Butanol, Isobutanol, Amylalkohol, 2-Ethylhexanol, Tridecanol, Talgfettalkohol, Stearylalkohol, C_{9/11}-Oxoalkohol, C_{13/15}-Oxoalkohol, C_{12/14}-Alfole und C_{16/18}-Alfole.

Nach der partiellen Umwandlung der Anhydridgruppen in Halbamid- oder Halbester-Gruppen erfolgt die Hydrolyse der noch vorhandenen Anhydridgruppen des Copolymerisats. Die Hydrolyse der restlichen Anhydridgruppen des Copolymerisats kann auch gleichzeitig mit der noch erforderlichen partiellen Neutralisation vorgenommen werden, indem man eine wäßrige Base zu dem partiell amidierten bzw. veresterten und noch Anhydridgruppen enthaltenden Copolymerisat zusetzt. Die Menge an Wasser und Basen wird so gewählt, daß die Konzentration der Copolymerisatdispersion oder Lösung vorzugsweise 20 bis 55 Gew.-% beträgt. Der pH-Wert liegt in dem Bereich von etwa 4 bis 10.

Ein weiterer Gegenstand der vorliegenden Erfindung betrifft die Verwendung der erfindungsgemäßen Copolymerisate als Hydrophobierungsmittel für Leder und Pelzfelle.

Die so erhältlichen wäßrigen Copolymerisatdispersionen sind beständig und lagerstabil. Sie eignen sich in hervorragender Weise zur Veredlung von Leder und Pelzen, weil sie eine besonders ausgeprägte hydrophobierende Wirkung aufweisen und darüberhinaus noch eine fettende und nachgerbende Wirkung entfalten. Das mit diesen Copolymerisatdispersionen behandelte Leder und Pelzmaterial zeigt nur noch eine geringe Wasseraufnahmebereitschaft und Wasserdurchlässigkeit. Die Dispersionen wirken gleichzeitig weichmachend, so daß man in den meisten Fällen keine zusätzlichen Fettungsmittel auf Basis natürlicher oder synthetischer Lickeröle benötigt. Die Dispersionen verleihen der Ware eine hohe Fülle und hohe Zug- und Weiterreißfestigkeiten, so daß eine zusätzliche Behandlung mit handelsüblichen Nachgerbstoffen, beispielsweise mit vegetabilen Gerbstoffen oder synthetischen organischen Gerbstoffen (Synthanen) auf Basis von Phenolsulfonsäure/Phenol/Formaldehyd-Kondensationsprodukten in den meisten Fällen nicht mehr erforderlich ist.

Ein weiterer Vorteil der erfindungsgemäß zu verwendenden wäßrigen Dispersionen besteht darin, daß sie keine zusätzlichen Emulgatoren enthalten. Leder und Pelze, die mit emulgatorhaltigen Produkten behandelt worden sind, müssen bekanntlich nach der Behandlung mit diesen Mitteln aufwendigen Prozessen, wie z.B. Nachbehandlung mit mehrwertigen Metallsalzen unterworfen werden, um die Emulgatoren im Leder oder in den Pelzfellen unwirksam zu machen.

Die oben beschriebenen Copolymerisatdispersionen eignen sich zur Behandlung von allen üblichen gegerbten Häuten, insbesondere mit Mineralgerbstoffen, wie Chrom-III-salzen, gegerbten Häuten. Die gegerbten Häute werden üblicherweise vor der Behandlung entsäuert. Sie können bereits vor der Behandlung gefärbt worden sein. Eine Färbung kann jedoch auch erst nach der erfindungsgemäß erfolgten Hydrophobierung vorgenommen werden.

Die gegerbten Häute werden mit den wäßrigen Dispersionen zweckmäßigerweise in wäßriger Flotte, die durch Verdünnen der Copolymerisatdispersionen mit Wasser erhältlich ist, bei pH-Werten von 4 bis 10, vorzugsweise 5 bis 8 und Temperaturen von 20 bis 60, vorzugsweise 30 bis 50°C während eines Zeitraums von 0,1 bis 5, insbesondere 0,5 bis 2 Stunden, behandelt. Diese Behandlung erfolgt beispielsweise durch Walken in einem Faß. Die benötigte Menge an Copolymerisatdispersion beträgt, bezogen auf das Falzgewicht des Leders oder das Naßgewicht der Pelzfelle, 0,1 bis 30, vorzugsweise 1 bis 20 Gew.-%. Die Flottenlänge, d.h. das prozentuale Gewichtsverhältnis der Behandlungsflotte zur Ware, bezogen auf das Falzgewicht des Leders, das Naßgewicht der Pelzfelle, beträgt üblicherweise 10 bis 1000, vorzugsweise 30 bis 250 %, bei Pelzfellen 50 bis 500 %.

Nach der Behandlung mit der oben beschriebenen wäßrigen Flotte wird der pH-Wert der Behandlungsflotte durch Zusatz von Säuren, vorzugsweise verwendet man organische Säuren, wie Ameisensäure, auf einen pH-Wert von 3 bis 5, vorzugsweise 3,5 bis 4 eingestellt.

Bei Mitverwendung von üblichen Nachgerbstoffen beim Veredlungsprozeß des Leders und der Pelzfelle kann die Behandlung mit den erfindungsgemäß zu verwendenden wäßrigen Dispersionen vor oder nach dem Nachgerbeschritt oder auch mehrstufig erfolgen, wobei die wäßrigen Dispersionen anteilsweise vor, während und nach dem Nachgerbungsschritt eingesetzt werden. Die als Hydrophobierungsmittel zu verwendenden wäßrigen Dispersionen können auch zusammen mit üblichen Leder- und Pelzveredlungsmitteln, wie Hydrophoblickern auf Paraffinbasis und/oder Wollfettbasis verwendet werden. Dadurch wird in einigen Fällen die Hydrophobierungs-, Fettungs- und Nachgerbwirkung verbessert.

Die Molmasse des Copolymerisats wird durch Gelpermeationschromatographie bestimmt, wobei als Elutionsmittel Tetrahydrofuran und zur Eichung eng verteilte Fraktionen von Polystyrol eingesetzt werden. Die Prüfung des behandelten Leders auf Wasseraufnahmebereitschaft und Wasserdurchlässigkeit erfolgt mit dem Bally-Penetrometer gemäß der Naßmethode IUP 10 der Internationalen Union der Leder-Chemiker-Verbände, Kommission für physikalische Lederprüfung, vgl. das Leder, Band 12, Seiten 36-40 (1961).

### Herstellungsbeispiele

### a) Polymerisation

In einem für Polymerisation ausgerichteten Reaktor aus Stahl, der mit einem Rührer und Dosiervorrichtungen versehen ist, werden den Angaben in Tabelle 1 entsprechende Mengen C₂₀-C₂₂-α-Olefin und Fluorolefin (Gemisch aus Perfluoroctylethen und Perfluordecylethen 1:1) vorgelegt und unter Rühren in einem schwachen N₂-Strom auf 150°C erhitzt. Sobald die Temperatur erreicht ist, fügt man dem Starter Di-t-Butylperoxid hinzu. Anschließend wird geschmolzenes Maleinsäureanhydrid gleichmäßig zudosiert, so daß die Reaktionstemperatur 190°C nicht überschreitet. Nachfolgend wird noch drei Stunden bei 150°C gerührt.

### b) Hydrolyse und Neutralisation

Zu der 150°C heißen Polymerschmelze werden - bezogen auf eingesetztes Maleinsäureanhydrid (MSA) als - äquimolare Mengen NaOH gelöst in entmineralisiertem Wasser (E-Wasser) hinzugefügt und 1 h bei 90°C nachgerührt. Die Menge E-Wasser wird so gewählt, daß nach beendeter Solvolyse eine 25 %ige Polymerdispersion vorliegt.

**Tabelle 1:**

| Einsatzmengen (in Gew.-%) für die Polymerisation | | | | |
|---|---|---|---|---|
| Bsp. | α-Olefin | Fluorolefin | MSA | Di-t-Butylperoxid |
| 1 (Vergleich) | 72,5 % | 0 % | 25,0 % | 2,5 % |
| 2 | 70,0 % | 2,5 % | 25,0 % | 2,5 % |
| 3 | 65,0 % | 7,5 % | 25,0 % | 2,5 % |
| 4 | 60,0 % | 12,5 % | 25,0 % | 2,5 % |

Man erhält auf diese Weise eine schwachviskose wäßrige Dispersion mit einem Feststoffgehalt von 25 %. Die Molmasse des nichthydrolysierten Copolymeren beträgt 5000 - 6000 g/Mol. Von den insgesamt anstehenden Carboxylgruppen waren 50 Mol-% neutralisiert.

### Anwendungsbeispiel

Chromgegerbtes Rindleder mit einer Falzstärke von 1,8 mm wird auf einen pH-Wert von 6,3 entsäuert. Die sich bildenden Salze werden ausgespült und das Leder wird mit 12 % der aus dem Herstellungsbeispiel stammenden Dispersion, bezogen auf das Falzgewicht, eineinhalb Stunden bei 45°C im Gerbfaß gewalkt. Mit Ameisensäure wird der pH-Wert auf 3,8 eingestellt. Das Leder wird anschließend gewaschen, mechanisch ausgereckt und getrocknet.

Das erhaltene Leder ist sehr weich, geschmeidig, gut gefüllt, festnarbig und besitzt sowohl eine hervorragende dynamische als auch statische Wasserfestigkeit (geprüft mit dem Bally-Penetrometer).

Tabelle 2 zeigt die ermittelten Kenndaten im Vergleich zu einem Copolymeren auf Basis von langkettigen Olefinen und ethylenisch ungesättigten Dicarbonsäureanhydriden.

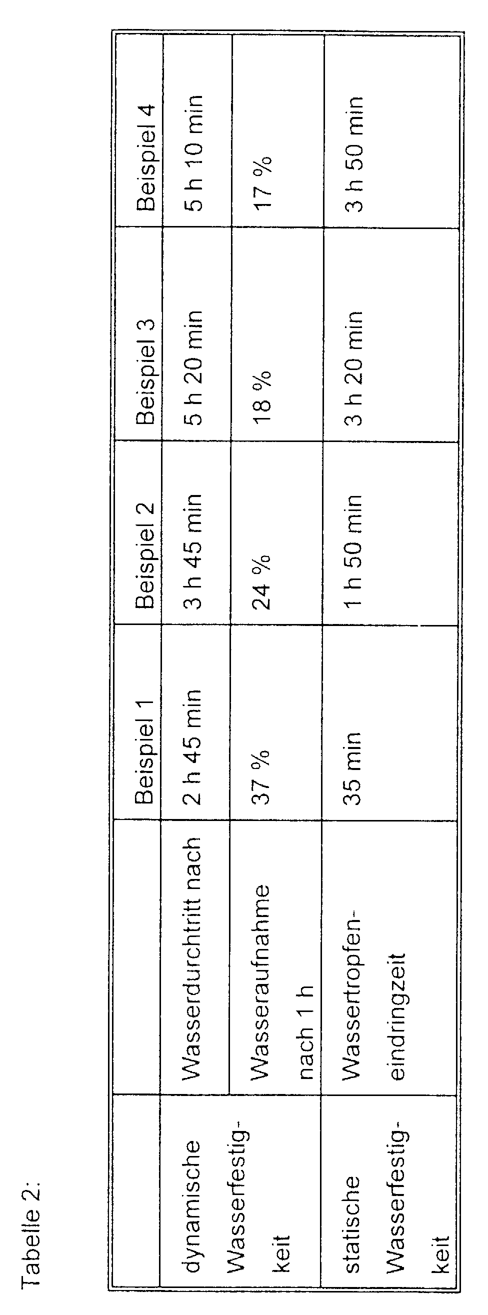

## Patentansprüche

1. Verfahren zur Herstellung von Copolymeren auf Basis von ethylenisch ungesättigten Dicarbonsäureanhydriden, langkettigen Olefinen und Fluorolefinen, das dadurch gekennzeichnet ist, daß man zunächst Monomere der allgemeinen Formel D und/oder E 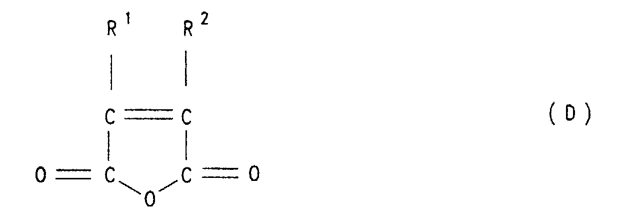 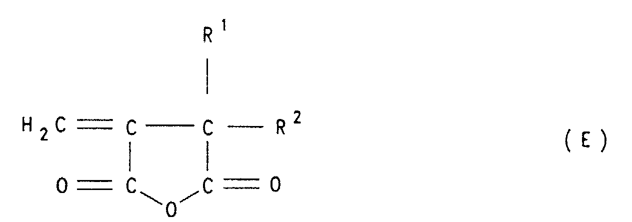 wobei R¹ und R² unabhängig voneinander Wasserstoff oder C₁-C₆-Alkyl bedeuten,
Monomere der allgemeinen Formel F 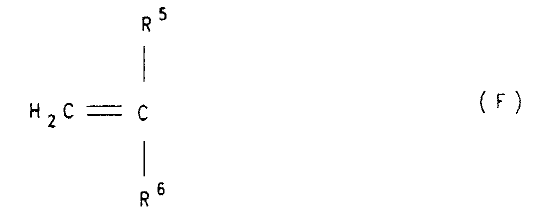 wobei
R⁵ Wasserstoff oder C₁-C₄-Alkyl und
R⁶ C₆-C₄₀-Alkyl oder C₆-C₁₈-Aryl bedeuten
und Monomere der allgemeinen Formel G
H₂C=CH-CₙF₂ₙ₊₁ (G)
wobei
n eine Zahl von 6 bis 24 bedeutet,
bei einer Temperatur im Bereich von 40 bis 400 °C miteinander polymerisiert, wobei die Molverhältnisse zwischen ethylenisch ungesättigten Dicarbonsäureanhydriden, Monomeren der allgemeinen Formel (F) und Monomeren der allgemeinen Formel (G) zwischen 1:0,5-2,0:0,01-0,5 liegen, anschließend eine Solvolyse der Anhydridgruppen der erhaltenen Copolymerisate unter Bildung von Gruppen der Formel -CO-X- durchführt, worin X die Gruppe -N-HR³,
wobei R³ C₁-C₄₀-Alkyl, bevorzugt C₃-C₃₀-Alkyl, C₃-C₄₀-Alkenyl, bevorzugt C₃-C₃₀-Alkenyl, C₅-C₂₀-Cycloalkyl oder C₆-C₁₈-Aryl ist,
die Gruppe -N-(R³)₂,
wobei R³ gleich oder verschieden ist und die obengenannte Bedeutung besitzt und/oder
die Gruppe -O-R⁴,
wobei R⁴ Wasserstoff, ein Alkalimetallkation, das Äquivalent eines Erdalkalimetallions, ein Kation der Formel H₂N^{⊕}(R³)₂ oder H₃N^{⊕}R³, C₁-C₄₀-Alkyl, C₅-C₂₀-Cycloalkyl oder C₆-C₁₈-Aryl ist, bedeuten.

2. Verfahren nach Anspruch 1, dadurch gekennzeichnet, daß die Polymerisation nach einem diskontinuierlichen oder kontinuierlichen Verfahren und Initiierung mit Radikalkettenstartern erfolgt.

3. Verfahren nach Anspruch 2, dadurch gekennzeichnet, daß die Menge an Initiator 0,1 bis 20 Gew.-%, bevorzugt 0,2 bis 10 Gew.-%, berechnet auf die Monomeren, beträgt.

4. Verfahren nach einem der Ansprüche 1 bis 3, dadurch gekennzeichnet, daß zur Erzielung niedermolekularer Copolymere geeignete Regler eingesetzt werden.

5. Verfahren nach einem der Ansprüche 1 bis 4, dadurch gekennzeichnet, daß die Polymerisation bei Temperaturen von 80 bis 300°C, erfolgt.

6. Verfahren nach einem der Ansprüche 1 bis 5, dadurch gekennzeichnet, daß die Molverhältnisse zwischen ethylenisch ungesättigten Dicarbonsäureanhydriden, Monomeren der allgemeinen Formel (F) und Monomeren der allgemeinen Formel (G) zwischen 1:0,9-1,1:0,03-0,2 liegen.

7. Verfahren nach Anspruch 1, dadurch gekennzeichnet, daß die Herstellung nach dem Verfahren der Substanzpolymerisation erfolgt.

8. Verfahren nach Anspruch 7, dadurch gekennzeichnet, daß die Menge an Initiator 0,01 bis 5 Gew.-%, bezogen auf die bei der Polymerisation eingesetzten Monomere, beträgt.

9. Verfahren nach Anspruch 7, dadurch gekennzeichnet, daß die Polymerisation bei einer Temperatur oberhalb 200°C in Abwesenheit von Initiatoren erfolgt.

10. Verfahren nach einem der Ansprüche 7 oder 8, dadurch gekennzeichnet, daß die Polymerisation in Gegenwart von Redox-Coinitiatoren erfolgt.

11. Verfahren nach Anspruch 10, dadurch gekennzeichnet, daß 0,1 bis 2000 ppm, vorzugsweise 0,1 bis 1000 ppm, bezogen auf die eingesetzte Menge an Monomeren, an Redox-Coinitiator verwendet werden.

12. Verfahren nach einem der Ansprüche 1 bis 11, dadurch gekennzeichnet, daß die Copolymerisation in einem druckdichten Kessel, in einer druckdichten Rührkesselkaskade oder in einem Rohrreaktor durchgeführt wird.

13. Verfahren nach einem der Ansprüche 7 bis 12, dadurch gekennzeichnet, daß man die Olefine oder ein Gemisch verschiedener Olefine vorlegt, unter Rühren auf die gewünschte Polymerisationstemperatur erhitzt und anschließend das ethylenisch ungesättigte Dicarbonsäureanhydrid zugibt.

14. Verfahren nach Anspruch 13, dadurch gekennzeichnet, daß der Initiator dem gegebenenfalls erwärmten Reaktionsgemisch aus Olefin und Fluorolefin zugegeben wird oder gelöst in einem in der Polymerisation eingesetzten Olefin zugegeben wird und anschließend das Dicarbonsäureanhydrid zugegeben wird.

15. Verfahren nach einem der Ansprüche 7 bis 14, dadurch gekennzeichnet, daß die ethylenisch ungesättigten Dicarbonsäureanhydride in Form einer Schmelze eingesetzt werden.

16. Verfahren nach einem der Ansprüche 1 bis 15, dadurch gekennzeichnet, daß die Solvolyse der hergestellten Copolymerisate bei Raumtemperatur oder bevorzugt bei einer Temperatur im Bereich von 80 bis 180°C, besonders bevorzugt 90 bis 150°C, erfolgt.

17. Verfahren nach Anspruch 16, dadurch gekennzeichnet, daß die Solvolyse aus einer Hydrolyse der Anhydridgruppen der Copolymerisate und gleichzeitigen oder nachfolgenden teilweisen Neutralisation der bei der Hydrolyse entstandenen Carboxylgruppen besteht.

18. Verfahren nach Anspruch 17, dadurch gekennzeichnet, daß zur Hydrolyse Wasser, verdünnte wäßrige Alkalimetall- und/oder Erdalkalimetallhydroxidlösungen, primäre Amine und/oder sekundäre Amine oder Alkohole verwendet werden.

19. Verfahren nach Anspruch 18, dadurch gekennzeichnet, daß bei der Solvolyse mit Hilfe von primären Aminen und/oder sekundären Aminen 10 bis 50 %, vorzugsweise 25 bis 50 %, der aus den einpolymerisierten Dicarbonsäureanhydrideinheiten insgesamt entstehenden Carboxylgruppen amidiert werden.

20. Verfahren nach Anspruch 17 bis 19, dadurch gekennzeichnet, daß zur teilweisen Neutralisation Ammoniak, Amine, bevorzugt primäre Amine und/oder sekundäre Amine und/oder verdünnte wäßrige Alkalimetall- und/oder Erdalkalimetallhydroxide eingesetzt werden.

21. Verwendung der nach einem oder mehreren der Ansprüche 1 bis 20 hergestellten Copolymerisate als Hydrophobierungsmittel für Leder und Pelzfelle.

22. Verfahren zur Hydrophobierung von Leder und Pelzfellen, dadurch gekennzeichnet, daß die gegerbten Häute mit 0,1 bis 30, vorzugsweise 1 bis 20 Gew.-% bezogen auf das Falzgewicht des Leders oder das Naßgewicht der Pelzfelle einer wäßrigen Dispersion eines Copolymers, hergestellt nach einem oder mehreren der Ansprüche 1 bis 20, bei pH-Werten von 4 bis 10, vorzugsweise 5 bis 8 und Temperaturen von 20 bis 60, vorzugsweise 30 bis 50 °C während eines Zeitraums von 0,1 bis 5, insbesondere 0,5 bis 2 Stunden, behandelt werden.

23. Copolymerisate, erhältlich nach dem Verfahren eines der Ansprüche 1 bis 20.

## Claims

1. A process for the preparation of copolymers based on ethylenically unsaturated dicarboxylic anhydrides, long-chain olefins and fluoroolefins, which comprises first polymerizing monomers of the formula D and/or E 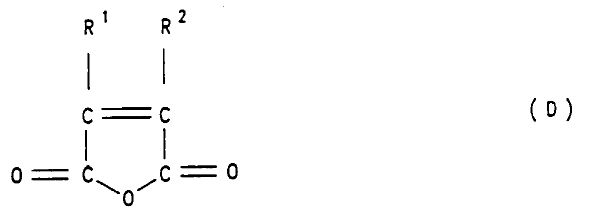 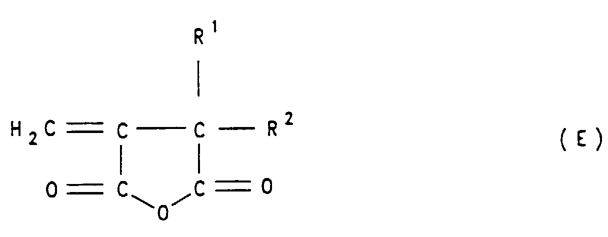 where R¹ and R², independently of one another, are hydrogen or C₁-C₆-alkyl,
monomers of the formula F 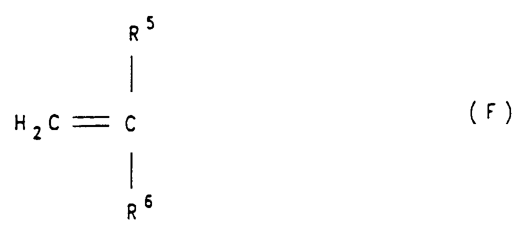 where
R⁵ is hydrogen or C₁-C₄-alkyl and
R⁶ is C₆-C₄₀-alkyl or C₆-C₁₈-aryl,
and monomers of the formula G
H₂C=CH-CₙF₂ₙ₊₁ (G)
where
n is a number from 6 to 24,
with one another at a temperature in the range from 40 to 400°C, the molar ratios of ethylenically unsaturated dicarboxylic anhydrides, monomers of the formula (F) and monomers of the formula (G) being 1:0.5-2.0:0.01-0.5, then carrying out solvolysis of the anhydride groups of the copolymers obtained with formation of groups of the formula -CO-X- in which X is the group -N-HR³,
where R³ is C₁-C₄₀-alkyl, preferably C₃-C₃₀-alkyl, C₃-C₄₀-alkenyl, preferably C₃-C₃₀-alkenyl, C₅-C₂₀-cycloalkyl or C₆-C₁₈-aryl,
the group -N-(R³)₂,
where R³ is identical or different and has the abovementioned meaning, and/or
the group -O-R⁴,
where R' is hydrogen, an alkali metal cation, the equivalent of an alkaline earth metal ion, a cation of the formula H₂N^{⊕}(R³)₂ or H₃N^{⊕}R³,
C₁-C₄₀-alkyl, C₅-C₂₀-cycloalkyl or C₆-C₁₈-aryl,

2. The process as claimed in claim 1, wherein the polymerization is carried out by a batchwise or continuous method and initiation is carried out with free radical chain initiators.

3. The process as claimed in claim 2, wherein the amount of initiator is 0.1 to 20% by weight, preferably 0.2 to 10% by weight, based on the monomers.

4. The process as claimed in any of claims 1 to 3, wherein suitable regulators are used in order to obtain low molecular weight copolymers.

5. The process as claimed in any of claims 1 to 4, wherein the polymerization is carried out at temperatures of 80 to 300°C.

6. The process as claimed in any of claims 1 to 5, wherein the molar ratios of ethylenically unsaturated dicarboxylic anhydrides, monomers of the formula (F) and monomers of the formula (G) are 1:0.9-1.1:0.03-0.2.

7. The process as claimed in claim 1, wherein the preparation is carried out by the mass polymerization method.

8. The process as claimed in claim 7, wherein the amount of initiator is 0.01 to 5% by weight, based on the monomers used in the polymerization.

9. The process as claimed in claim 7, wherein the polymerization is carried out at a temperature above 200°C in the absence of initiators.

10. The process as claimed in either of claims 7 or 8, wherein the polymerization is carried out in the presence of redox coinitiators.

11. The process as claimed in claim 10, wherein 0.1 to 2000 ppm, preferably 0.1 to 1000 ppm, based on the amount of monomers used, of redox coinitiator are used.

12. The process as claimed in any of claims 1 to 11, wherein the copolymerization is carried out in a pressure-resistant vessel, in a pressure-resistant stirred vessel cascade or in a tube reactor.

13. The process as claimed in any of claims 7 to 12, wherein the olefins or a mixture of different olefins are/is initially introduced and heated to the desired polymerization temperature while stirring, and the ethylenically unsaturated dicarboxylic anhydride is then added.

14. The process as claimed in claim 13, wherein the initiator is added to the unheated or heated reaction mixture comprising olefin and fluoroolefin or is added as a solution in an olefin used in the polymerization, and the dicarboxylic anhydride is then added.

15. The process as claimed in any of claims 7 to 14, wherein the ethylenically unsaturated dicarboxylic anhydrides are used in the form of a melt.

16. The process as claimed in any of claims 1 to 15, wherein the solvolysis of the copolymers prepared is carried out at room temperature or preferably at a temperature in the range from 80 to 180°C, particularly preferably 90 to 150°C.

17. The process as claimed in claim 16, wherein the solvolysis comprises a hydrolysis of the anhydride groups of the copolymers and simultaneous or subsequent partial neutralization of the carboxyl groups formed in the hydrolysis.

18. The process as claimed in claim 17, wherein water, dilute aqueous alkali metal and/or alkaline earth metal hydroxide solutions, primary amines and/or secondary amines or alcohols are used for the hydrolysis.

19. The process as claimed in claim 18, wherein 10 to 50%, preferably 25 to 50%, of the carboxyl groups formed altogether from the polymerized dicarboxylic anhydride units are amidated in the solvolysis with the aid of primary amines and/or secondary amines.

20. The process as claimed in any of claims 17 to 19, wherein ammonia, amines, preferably primary amines and/or secondary amines, and/or dilute aqueous alkali metal and/or alkaline earth metal hydroxides are used for the partial neutralization.

21. The use of the copolymers prepared as claimed in one or more of claims 1 to 20, as water repellents for leather and pelts.

22. A process for making leather and pelts water repellent, which comprises treating the tanned hides with 0.1 to 30, preferably 1 to 20, % by weight, based on the shaved weight of the leather or the wet weight of the pelts, of an aqueous emulsion of a copolymer, prepared as claimed in one or more of claims 1 to 20, at pH values of 4 to 10, preferably 5 to 8, and temperatures of 20 to 60, preferably 30 to 50, °C during a period of 0.1 to 5, in particular 0.5 to 2 hours.

23. A copolymer which can be obtained by the process of one of claims 1 to 20.

## Revendications

1. Procédé pour la préparation de copolymères à base d'anhydrides d'acides dicarboxyliques éthyléniquement insaturés, d'oléfines à longues chaînes et d'oléfines fluorées, qui est caractérisé en ce que l'on polymérise d'abord entre eux, à une température dans le domaine de 40 à 400°C, des monomères de formule générale D et/ou E 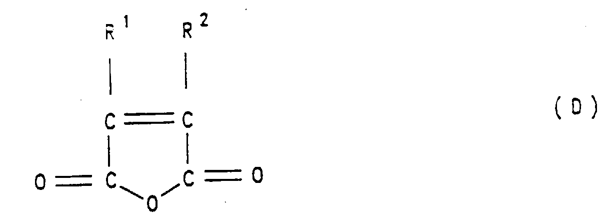 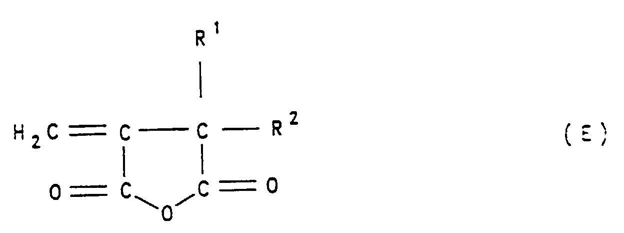 dans lesquelles R¹ et R², indépendamment l'un de l'autre, représentent hydrogène ou alkyle en C₁-C₆, des monomères de formule F 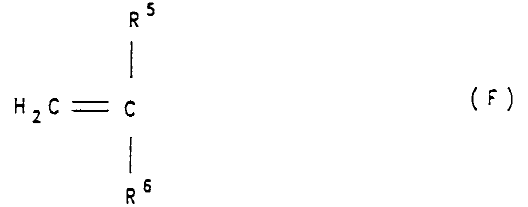 dans laquelle R⁵ représente hydrogène ou alkyle en C₁-C₄ et R⁶ représente alkyle en C₆-C₄₀ ou aryle en C₆-C₁₈ et des monomères de formule générale G
H₂C=CH-CₙF₂ₙ₊₁ (G)
dans laquelle n représente un nombre de 6 à 24,
les proportions molaires entre les anhydrides d'acides dicarboxyliques éthyléniquement insaturés les monomères de formule générale (F) et les monomères de formule générale (G) étant comprises entre 1:0,5-2,0:0,01-0,5,
on effectue ensuite une solvolyse des groupes anhydride des copolymères obtenus, avec formation de groupes de formule -CO-X-,
dans laquelle X représente le groupe -N-HR^{3,}
R³ étant alkyle en C1-C40, de préférence alkyle en C₃-C₃₀, alcényle en C₃-C₄₀, de préférence alcényle en C₃-C₃₀, cycloalkyle en C₅-C₂₀ ou aryle en C₆-C₁₈,
le groupe -N-(R³)₂,
les R³ étant identiques ou différents et possédant la signification indiquée ci-dessus et/ou
le groupe -O-R⁴,
R⁴ étant hydrogène, un cation de métal alcalin, l'équivalent d'un ion de métal alcalino-terreux, un cation de formule H₂N⁺(R³)₂ ou H₃N⁺R³, alkyle en C₁-C₄₀, cycloalkyle en C₅-C₂₀ ou aryle en C₆-C₁₈.

2. Procédé selon la revendication 1, caractérisé en ce que la polymérisation a lieu selon un procédé discontinu ou continu et amorçage par des initiateurs de chaînes radicalaires.

3. procédé selon la revendication 2, caractérisé en ce que la quantité d'amorceur est de 0,1 à 20 % en poids, de préférence de 0,2 à 10 % en poids, calculé sur les monomères.

4. Procédé selon l'une des revendications 1 à 3, caractérisé en ce que l'on utilise un régulateur approprié pour obtenir des copolymères de bas poids moléculaire.

5. Procédé selon une des revendications 1 à 4, caractérisé en ce que la polymérisation a lieu à des températures de 80 à 300°C.

6. procédé selon l'une des revendications 1 à 5, caractérisé en ce que les proportions molaires entre les anhydrides d'acides dicarboxyliques éthyléniquement insaturés, les monomères de formule générale (F) et les monomères de formule générale (G) sont entre 1:9,1-1,1:0,03-0,2.

7. Procédé selon la revendication 1, caractérisé en ce que la préparation a lieu après le processus de polymérisation de substance.

8. Procédé selon la revendication 7, caractérisé en ce que la quantité d'amorceur est de 0,01 à 5 % en poids, par rapport aux monomères utilisés lors de la polymérisation.

9. Procédé selon la revendication 7, caractérisé en ce que la polymérisation a lieu à une température supérieure à 200°C, en l'absence d'amorceurs.

10. Procédé selon l'une des revendications 7 ou 8, caractérisé en ce que la polymérisation a lieu en présence de co-amorceurs redox.

11. Procédé selon la revendication 10, caractérisé en ce que l'on utilise 0,1 à 2000 ppm, de préférence 0,1 à 1000 ppm, de co-amorceur redox, par rapport à la quantité de monomères utilisée.

12. Procédé selon l'une des revendicaations 1 à 11, caractérisé en ce que la copolymérisation est effectuée dans un autoclave étanche, dans une cascade d'autoclaves à agitation étanches ou dans un réacteur en tube.

13. Procédé selon l'une des revendications 7 à 12, caractérisé en ce que l'on chauffe les oléfines ou un mélange de différentes oléfines, sous agitation, à la température souhaitée de polymérisation et en ce que l'on ajoute ensuite l'anhydride d'acide dicarboxylique éthyléniquement insaturé.

14. procédé selon la revendication 13, caractérisé en ce que l'amorceur est ajouté au mélange réactionnel éventuellement chauffé d'oléfine et d'oléfine fluorée ou est ajouté dissous dans une oléfine soumise à la polymérisation et ensuite l'anhydride d'acide dicarboxylique est ajouté.

15. Procédé selon l'une des revendications 7 à 14, caractérisé en ce que les anhydrides d'acides dicarboxyliques éthyléniquement insaturés sont utilisés sous forme d'une masse fondue.

16. Procédé selon l'une des revendications 1 à 15, caractérisé en ce que la solvolyse des copolymères préparés a lieu à la température ambiante ou, de préférence, à une température dans le domaine de 80 à 180°C, de façon particulièrement préférée de 90 à 150°C.

17. Procédé selon la revendication 16, caractérisé en ce que la solvolyse est constituée d'une hydrolyse des groupes anhydride des copolymères et d'une neutralisation partielle simultanée ou subséquente des groupes carboxyle résultant de l'hydrolyse.

18. Procédé selon la revendication 17, caractérisé en ce que, pour l'hydrolyse, on utilise de l'eau, des solutions aqueuses diluées d'hydroxydes de métaux alcalins et/ou alcalino-terreux, des amines primaires et/ou des amines secondaires ou des alcools.

19. Procédé selon la revendication 18, caractérisé en ce que, lors de la solvolyse à l'aide d'amines primaires et/ou d'amines secondaires, 10 à 50 %, de préférence 25 à 50 %, des groupes carboxyle résultant en tout des unités d'anhydrides d'acides dicarboxyliques polymérisées, sont amidifiés.

20. Procédé selon la revendication 17 à 19, caractérisé en ce que, pour la neutralisation partielle, on utilise de l'ammoniaque, des amines, de préférence des amines primaires et/ou des amines secondaires et/ou des hydroxydes de métaux alcalins et/ou alcalino-terreux aqueux, dilués.

21. Utilisation des copolymères préparés selon une ou plusieurs des revendications 1 à 20 comme imperméabilisants pour le cuir et les peausseries.

22. Procédé d'imperméabilisation du cuir et des peausseries, caractérisé en ce que les peaux tannées sont traitées avec 0,1 à 30, de préférence 1 à 20 % en poids par rapport au poids au dérayage du cuir ou au poids à l'état humide des peausseries, d'une dispersion aqueuse d'un copolymère préparé selon une ou plusieurs des revendications 1 à 20, à des valeurs de pH de 4 à 10, de préférence de 5 à 8 et des températures de 20 à 60, de préférence de 30 à 50°C, pendant une durée de 0,1 à 5, en particulier de 0,5 à 2 heures.

23. Copolymères que l'on peut obtenir selon le procédé de l'une des revendications 1 à 20.
